# EUROPEAN PATENT APPLICATION

(11) **EP 4 694 526 A1**
(43) Date of publication of application: **11.02.2026**
(21) Application number: 23929353.3
(22) Date of filing: 30.03.2023
(51) Int. Cl.: H04W 74/08, H04W 76/18

(54) **METHOD FOR COUNTING SL CONSISTENT LBT FAILURES, AND COMMUNICATION APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2023/085288
(87) International publication number: WO 2024/197758

(57) **Abstract**

Provided in the disclosure are a method for counting SL consistent LBT failures, and a communication apparatus, which may be applied in the field of mobile communications. The method comprises: when sidelink data is sent in an SL unlicensed frequency band, counting LBT failures in a resource in a resource pool according to an LBT failure indication for a resource block set, which belongs to the resource pool. Therefore, when the granularity of the resource pool is greater than the granularity of the resource block set, LBT failures in the resource pool are counted on the basis of an LBT failure indication for the resource block set, which belongs to the resource pool, such that detection of SL consistent LBT failures in the granularity of the resource pool can be realized.

## Description

### TECHNICAL FIELD

The disclosure relates to the field of communication technology, in particular to a method for counting sidelink (SL) consistent listen-before-talk (LBT) failure times and a communication apparatus.

### BACKGROUND

In related arts, uplink and downlink operations may be performed on in the unlicensed frequency band, and channel access for both downlink and uplink depends on LBT characteristics. In addition, to support direct communication between terminals, an SL communication mode is introduced. SL communication may also use the unlicensed frequency band, and the terminal need to perform the LBT when transmitting SL data on the unlicensed frequency band.

### SUMMARY

A first aspect of embodiments of the disclosure provides a method for counting SL consistent listen-before-talk LBT failure time, which is performed by a terminal and includes:
in a case of sending SL data on an SL unlicensed frequency band, and counting, according to an LBT failure indication of a resource block (RB) set belonging to a resource pool, LBT failure times of the resource pool.

A second aspect of embodiments of the disclosure provides another method for counting SL consistent listen-before-talk LBT failure time, which is performed by a terminal and includes:
in a case of sending SL data on an SL unlicensed frequency band, counting, according to an LBT failure indication of an RB set to which a resource pool belongs, LBT failure times of the resource pool.

A third aspect of embodiments of the disclosure provides another method for counting SL consistent listen-before-talk LBT failure time, which is performed by a terminal and includes:
in a case of sending SL data on an SL unlicensed frequency band, counting, according to an LBT failure indication of an RB set, LBT failure times of the RB set.

A fourth aspect of embodiments of the disclosure provides a communication apparatus, including:
a processing module, configured to, in a case of sending SL data on an SL unlicensed frequency band, count LBT failure times of a resource pool according to an LBT failure indication of an RB set belonging to the resource pool.

A fifth aspect of embodiments of the disclosure provides another communication apparatus, including:
a processing module, configured to, in a case of sending SL data on an SL unlicensed frequency band, count LBT failure times of a resource pool according to an LBT failure indication of an RB set to which the resource pool belongs.

A sixth aspect of embodiments of the disclosure provides another communication apparatus, including:
a processing module, configured to, in a case of sending SL data on an SL unlicensed frequency band, count LBT failure times of an RB set according to an LBT failure indication of the RB set.

A seventh aspect of embodiments of the disclosure provides a communication apparatus including a processor. When the processor invokes a computer program stored in a memory, the method according to the first aspect is executed.

An eighth aspect of embodiments of the disclosure provides another communication apparatus including a processor. When the processor invokes a computer program stored in a memory, the method according to the second aspect is executed.

A ninth aspect of embodiments of the disclosure provides another communication apparatus including a processor. When the processor invokes a computer program stored in a memory, the method according to the third aspect is executed.

A tenth aspect of embodiments of the disclosure provides a communication apparatus, which includes a processor and a memory, in which a computer program is stored in the memory; the processor executes the computer program stored in the memory to enable the communication apparatus to perform the method according to the first aspect.

An eleventh aspect of embodiments of the disclosure provides another communication apparatus, which includes a processor and a memory, in which a computer program is stored in the memory; the processor executes the computer program stored in the memory to enable the communication apparatus to perform the method according to the second aspect.

A twelfth aspect of embodiments of the disclosure provides another communication apparatus, which includes a processor and a memory, in which a computer program is stored in the memory; the processor executes the computer program stored in the memory to enable the communication apparatus to perform the method according to the third aspect.

A thirteenth aspect of embodiments of the disclosure provides a communication apparatus, which includes a processor and an interface circuit. The interface circuit is configured to receive code instructions and transmit the code instructions to the processor, and the processor is configured to run the code instructions to enable the communication apparatus to execute the method according to the first aspect.

A fourteenth aspect of embodiments of the disclosure provides a communication apparatus, which includes a processor and an interface circuit. The interface circuit is configured to receive code instructions and transmit the code instructions to the processor, and the processor is configured to run the code instructions to enable the communication apparatus to execute the method according to the second aspect.

A fifteenth aspect of embodiments of the disclosure provides a communication apparatus, which includes a processor and an interface circuit. The interface circuit is configured to receive code instructions and transmit the code instructions to the processor, and the processor is configured to run the code instructions to enable the communication apparatus to execute the method according to the third aspect.

A sixteenth aspect of embodiments of the disclosure provides a computer-readable storage medium for storing instructions used by the above communication apparatus. When the instructions are executed, the communication apparatus is caused to execute the method according to the first aspect.

A seventeenth aspect of embodiments of the disclosure provides another computer-readable storage medium for storing instructions used by the above communication apparatus. When the instructions are executed, the communication apparatus is caused to execute the method according to the second aspect.

An eighteenth aspect of embodiments of the disclosure provides another computer-readable storage medium for storing instructions used by the above communication apparatus. When the instructions are executed, the communication apparatus is caused to execute the method according to the third aspect

A nineteenth aspect of embodiments of the disclosure provides a computer program product including a computer program, which, when run on a computer, causes the computer to execute the method according to the first aspect.

A twentieth aspect of embodiments of the disclosure provides another computer program product including a computer program, which, when run on a computer, causes the computer to execute the method according to the second aspect.

A twenty-first aspect of embodiments of the disclosure provides another computer program product including a computer program, which, when run on a computer, causes the computer to execute the method according to the third aspect.

A twenty-second aspect of embodiments of the disclosure provides a chip system, which includes at least one processor and at least one interface. The chip system is configured to support a communication apparatus in implementing the functions involved in the first aspect, for example, determining or processing at least one of the data and information involved in the above method. In a possible design, the chip system further includes a memory for storing necessary computer programs and data of the communication apparatus. The chip system may be composed of a chip, or may include a chip and other discrete components.

A twenty-third aspect of embodiments of the disclosure provides another chip system, which includes at least one processor and at least one interface. The chip system is configured to support a communication apparatus in implementing the functions involved in the second aspect, for example, determining or processing at least one of the data and information involved in the above method. In a possible design, the chip system further includes a memory for storing necessary computer programs and data of the communication apparatus. The chip system may be composed of a chip, or may include a chip and other discrete components.

A twenty-fourth aspect of embodiments of the disclosure provides another chip system, which includes at least one processor and at least one interface. The chip system is configured to support a communication apparatus in implementing the functions involved in the third aspect, for example, determining or processing at least one of the data and information involved in the above method. In a possible design, the chip system further includes a memory for storing necessary computer programs and data of the communication apparatus. The chip system may be composed of a chip, or may include a chip and other discrete components.

A twenty-fifth aspect of embodiments of the disclosure provides a computer program, which, when run on a computer, causes the computer to execute the method according to the first aspect.

A twenty-sixth aspect of embodiments of the disclosure provides a computer program, which, when run on a computer, causes the computer to execute the method according to the second aspect.

A twenty-seventh aspect of embodiments of the disclosure provides a computer program, which, when run on a computer, causes the computer to execute the method according to the third aspect.

### BRIEF DESCRIPTION OF THE DRAWINGS

The above-mentioned and/or additional aspects and advantages of the disclosure will become apparent and easily understandable from the following description of embodiments in conjunction with the accompanying drawings.
FIG. 1 is a schematic diagram of a communication system according to an embodiment of the disclosure.
FIG. 2 is a schematic flowchart of a method for counting SL consistent LBT failure times according to an embodiment of the disclosure.
FIG. 3 is schematic flowchart of a method for counting SL consistent LBT failure times according to an embodiment of the disclosure.
FIG. 4 is schematic flowchart of a method for counting SL consistent LBT failure times according to an embodiment of the disclosure.
FIG. 5 is schematic flowchart of a method for counting SL consistent LBT failure times according to an embodiment of the disclosure.
FIG. 6 is schematic flowchart of a method for counting SL consistent LBT failure times according to an embodiment of the disclosure.
FIG. 7 is schematic flowchart of a method for counting SL consistent LBT failure times according to an embodiment of the disclosure.
FIG. 8 is schematic flowchart of a method for counting SL consistent LBT failure times according to an embodiment of the disclosure.
FIG. 9 is schematic flowchart of a method for counting SL consistent LBT failure times according to an embodiment of the disclosure.
FIG. 10 is schematic flowchart of a method for counting SL consistent LBT failure times according to an embodiment of the disclosure.
FIG. 11 is schematic flowchart of a method for counting SL consistent LBT failure times according to an embodiment of the disclosure.
FIG. 12 is schematic flowchart of a method for counting SL consistent LBT failure times according to an embodiment of the disclosure.
FIG. 13 is schematic flowchart of a method for counting SL consistent LBT failure times according to an embodiment of the disclosure.
FIG. 14 is a schematic diagram of a communication apparatus according to an embodiment of the disclosure.
FIG. 15 is a schematic diagram of a communication apparatus according to another embodiment of the disclosure.
FIG. 16 is a schematic diagram of a chip according to another embodiment of the disclosure.

### DETAILED DESCRIPTION

In order to better understand a method for counting SL consistent LBT failure times disclosed in the embodiments of the disclosure, a communication system applicable to the embodiments of the disclosure will be described first.

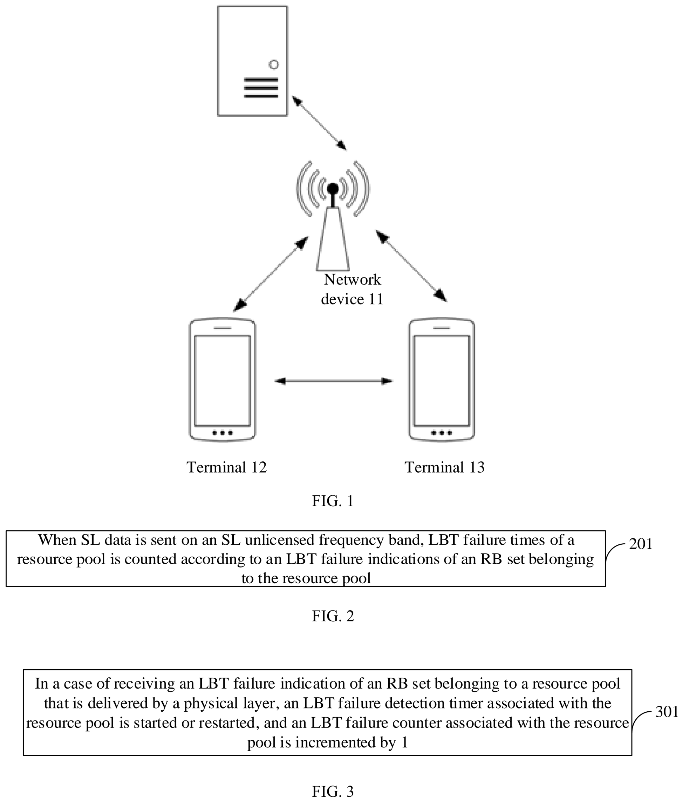

As illustrated in FIG. 1, FIG. 1 is a schematic diagram of a communication system according to an embodiment of the disclosure. The communication system may include, but is not limited to, one network device and two terminals, where the terminals are connected via a sidelink (SL). The number and form of devices shown in FIG. 1 are for illustration only and do not constitute a limitation on the embodiments of the disclosure. In practical applications, the communication system may include two or more network devices and two or more terminals. The communication system shown in FIG. 1 takes the inclusion of one network device 11 and two terminals 12 and 13 as an example, where the terminal 12 and the terminal 13 are connected via an SL.

In the present disclosure, the terminal 12 may serve as a transmitting end, and the terminal 13 may serve as a peer terminal. The number of terminal 13 may be one or more, which is not limited by the present disclosure. Alternatively, the terminal 13 may serve as a transmitting end, and the terminal 12 may serve as a peer terminal. The number of terminal 12 may be one or more, which is not limited by the present disclosure.

It is noteworthy that the technical solution of the embodiments of the disclosure may be applied to various communication systems, such as, a LTE system, a 5G mobile communication system, a 5G NR system, or other future new mobile communication systems. It should also be noted that sidelink in the embodiments of the disclosure may also be referred to as a side link or a direct link.

The network device 101 in the embodiments of the disclosure is an entity on a network side for transmitting or receiving signals. For example, the network device 101 may be an evolved NodeB (eNB), a transmission reception point (TRP), a next generation NodeB (gNB) in a NR system, a base station in other future mobile communication systems or an access node in a wireless fidelity (Wi-Fi) system. The specific technology and specific device form adopted by the network device are not limited in the embodiments of the disclosure. The network device according to the embodiments of the disclosure may be composed of a central unit (CU) and a distributed unit (DU). The CU may also be called control unit. The use of CU-DU structure allows to divide a protocol layer of the network device, such as a base station, such that some protocol layer functions are placed in the CU for centralized control, and some or all of the remaining protocol layer functions are distributed in the DU, which is centrally controlled by the CU.

The terminal 102 in the embodiments of the disclosure is an entity on a user side for receiving or transmitting signals, such as a cellular phone. The terminal may also be referred to as terminal, user equipment (UE), mobile station (MS), mobile terminal (MT), and the like. The terminal may be a car with communication functions, a smart car, a mobile phone, a wearable device, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in the embodiments of the disclosure.

It is understandable that the communication system described in the embodiments of the disclosure is intended to clearly illustrate the technical solution of the embodiments of the disclosure, and does not constitute a limitation on the technical solution of the embodiments of the disclosure. It is understandable by those skilled in the art that as system architectures evolve and new business scenarios emerge, the technical solution provided by the embodiments of the disclosure are also applicable to similar technical problems.

In related arts, uplink and downlink operations may be performed on in the unlicensed frequency band, and channel access for both downlink and uplink depends on LBT characteristics. In addition, to support direct communication between terminals, an SL communication mode is introduced. SL communication may also use the unlicensed frequency band, and the terminal need to perform the LBT when transmitting SL data on the unlicensed frequency band. A consistent LBT mechanism is also applicable to the SL communication on an unlicensed spectrum.

For one SL transmission, the terminal may need to perform the LBT on a plurality of RB sets. Regarding an LBT failure indication, a physical layer may deliver the LBT failure indication only when the LBT fails. In a case where the LBT succeeds, the physical layer does not need to deliver the indication. A granularity of the LBT failure indication may be a granularity of the RB set. That is, to transmit one SL media access control protocol data unit (SL MAC PDU), the physical layer may need to perform the LBT on a plurality of RB sets, and thus a plurality of LBT failure indications may be delivered to a MAC layer.

In the embodiments of the disclosure, when a terminal transmits SL data on an SL unlicensed frequency band, the terminal may count, according to an LBT failure indication of an RB set belonging to a resource pool, LBT failure times of the resource pool. Thus, when the granularity of the resource pool is larger than the granularity of the RB set and the granularity of consistent LBT failure detection is the granularity of the resource pool, the LBT failure times of the resource pool may be counted based on the LBT failure indication of the RB set belonging to the resource pool.

A method for counting SL consistent LBT failure times and a communication apparatus provided by the disclosure will be described in detail below with reference to the accompanying drawings.

The method for counting SL consistent LBT failure times of the disclosure can be applied to an SL-unlicensed (SL-U) scenario.

First, it should be noted that the SL communication may have the following two allocation modes for transmitting resources: one is the mode in which a network schedules an SL for transmitting the resources (which may be referred to as mode 1), and the other is the mode in which an SL are selected autonomously for transmitting the resources (which may be referred to as mode 2). The specific allocation mode used by the terminal may be configured by a network device via a radio resource control (RRC) signaling.

Referring to FIG. 2, FIG. 2 is a schematic flowchart of a method for counting SL consistent LBT failure times provided by an embodiment of the disclosure, and the method is performed by a terminal. As shown in FIG. 2, the method may include but is not limited to the following steps.

At step 201: when SL data is sent on an SL unlicensed frequency band, LBT failure times of a resource pool is counted according to an LBT failure indications of an RB set belonging to the resource pool.

The SL data may include data, a control signaling, a hybrid automatic repeat request (HARQ) feedback, a synchronization signal block (SSB) unit, and the like sent by the terminal to other terminals.

For example, the SL data may include a control instruction transmitted on a physical sidelink control channel (PSCCH), data and a control instruction transmitted on a physical sidelink shared channel (PSSCH), and a HARQ feedback transmitted on a physical sidelink feedback channel (PSFCH).

In some embodiments of the disclosure, one or more resource pools and one or more RB sets may be configured for the terminal.

In some embodiments of the disclosure, the resource pool and the RB set may be configured for the terminal by the network device or be pre-configured, which is not limited in the disclosure.

In some embodiments of the disclosure, one RB set may belong to one resource pool or belong to a plurality of resource pools. That is, all resources of the RB set may belong to one resource pool, or a plurality of different parts of resources of the RB set may respectively belong to different resource pools, which is not limited in the disclosure.

In some embodiments of the disclosure, one resource pool may include one RB set, or one resource pool may include a plurality of RB sets. One resource pool may include all or part of the resources of one RB set. One resource pool may include resources of a plurality of RB sets. For the plurality of RB sets included in one resource pool, all or part of resources of those RB sets may belong to the one resource pool, which is not limited in the disclosure.

In some embodiments of the disclosure, the granularity of the resource pool may be larger than the granularity of the RB set. When the granularity of SL consistent LBT failure detection is the granularity of the resource pool, for each resource pool, the LBT failure times of the resource pool may be counted according to the LBT failure indication(s) of the RB set(s) belonging to the resource pool. For example, when one resource pool includes one RB set, the LBT failure times of the resource pool may be counted based on the LBT failure indication of the one RB set. For another example, when one resource pool includes a plurality of RB sets, the LBT failure times of the resource pool may be counted according to the LBT failure indications of the plurality of RB sets.

For example, the LBT failure times of the resource pool may be determined according to the number of LBT failure indication(s) of the RB set(s) belonging to the resource pool.

In some embodiments of the disclosure, one resource pool of the terminal may be associated with at least one of: one LBT failure detection timer; one LBT failure counter; a single maximum count of LBT failures. That is, the terminal may maintain one or more of the one LBT failure detection timer, the one LBT failure counter, and the single maximum count of LBT failures for one resource pool. For example, for each resource pool, the terminal maintains the one LBT failure detection timer, the one LBT failure counter, and the single maximum count of LBT failures.

In some embodiments of the disclosure, the maximum count of LBT failures associated with different resource pools may be the same or different, which is not limited in the disclosure.

In the embodiments of the disclosure, when the terminal transmits SL data on the SL unlicensed frequency band, the terminal may count the LBT failure times of the resource pool according to the LBT failure indication(s) of the RB set(s) belonging to the resource pool. Thus, when the granularity of the resource pool is larger than the granularity of the RB set, the LBT failure times of the resource pool are counted based on the LBT failure indication(s) of the RB set(s) belonging to the resource pool, enabling the SL consistent LBT failure detection with the granularity of the resource pool.

Referring to FIG. 3, FIG. 3 is a schematic flowchart of a method for counting SL consistent LBT failure times provided by an embodiment of the disclosure, and the method is performed by a terminal. As shown in FIG. 3, the method may include but is not limited to the following steps.

At step 301: in a case of receiving an LBT failure indication of an RB set belonging to a resource pool that is delivered by a physical layer, an LBT failure detection timer associated with the resource pool is started or restarted, and an LBT failure counter associated with the resource pool is incremented by 1.

In some embodiments of the disclosure, one or more resource pools and one or more RB sets may be configured for the terminal.

In some embodiments of the disclosure, the resource pool and the RB set may be configured for the terminal by the network device or be pre-configured, which is not limited in the disclosure.

In some embodiments of the disclosure, one RB set may belong to one resource pool or belong to a plurality of resource pools. That is, all resources of the RB set may belong to one resource pool, or a plurality of different parts of resources of the RB set may respectively belong to different resource pools, which is not limited in the disclosure.

In some embodiments of the disclosure, one resource pool may include one RB set, or one resource pool may include a plurality of RB sets. One resource pool may include all or part of the resources of one RB set. One resource pool may include resources of a plurality of RB sets. For the plurality of RB sets included in one resource pool, all or part of resources of those RB sets may belong to the one resource pool, which is not limited in the disclosure.

In some embodiments of the disclosure, one resource pool of the terminal may be associated with at least one of: one LBT failure detection timer; one LBT failure counter; a single maximum count of LBT failures. That is, the terminal may maintain one or more of the one LBT failure detection timer, the one LBT failure counter, and the single maximum count of LBT failures for one resource pool. For example, for each resource pool, the terminal maintains the one LBT failure detection timer, the one LBT failure counter, and the single maximum count of LBT failures.

In some embodiments of the disclosure, the maximum count of LBT failures associated with different resource pools may be the same or different, which is not limited in the disclosure.

In the embodiments of the disclosure, the granularity of the resource pool may be larger than the granularity of the RB set. When the granularity of SL consistent LBT failure detection is the resource pool granularity, for each resource pool, the terminal may count, according to the LBT failure indication of the RB set belonging to the resource pool, the LBT failure times of the resource pool by using the LBT failure detection timer associated with the resource pool and the LBT failure counter associated with the resource pool. The LBT failure counter associated with the resource pool is used to count the LBT failure times of the resource pool, and an initial value of the LBT failure counter associated with the resource pool may be zero.

In some embodiments of the disclosure, before the terminal sends SL data each time, the physical layer of the terminal may first perform LBT failure detection on the RB set. If the LBT fails, the physical layer of the terminal will deliver the LBT failure indication of the RB set to a MAC layer. Each time the MAC layer of the terminal receives the LBT failure indication of the RB set belonging to the resource pool that is delivered by the physical layer, the LBT failure detection timer associated with the resource pool may be started or restarted, and the LBT failure counter associated with the resource pool is incremented by 1. When the LBT failure detection timer associated with the resource pool times out, the LBT failure counter may be reset to 0.

For example, the RB sets belonging to a certain resource pool are R1, R2, and R3, and the initial value of the LBT failure counter associated with the resource pool is 0. When the LBT failure indication of R1 delivered by the physical layer is received, the LBT failure detection timer associated with the resource pool is started, and the LBT failure counter associated with the resource pool is incremented by 1, so that the LBT failure times of the resource pool is 1. Then, when the LBT failure indication of R2 delivered by the physical layer is received during the operation of the LBT failure detection timer associated with the resource pool, the LBT failure detection timer associated with the resource pool is restarted, and the LBT failure counter associated with the resource pool is incremented by 1, so that the LBT failure times of the resource pool is 2. Then, when the LBT failure indication of R1 delivered by the physical layer is received during the operation of the LBT failure detection timer associated with the resource pool, the LBT failure detection timer associated with the resource pool is restarted, and the LBT failure counter associated with the resource pool is incremented by 1, so that the LBT failure times of the resource pool is 3.

In some embodiments, in a case where all resources of any RB set in the RB set(s) belonging to the resource pool belong to the resource pool, when the LBT failure indication of any RB set is received, the LBT failure detection timer associated with the resource pool is started or restarted, and the LBT failure counter associated with the resource pool is incremented by 1.

In some embodiments, in a case where a part of resources of any RB set in the RB set(s) belonging to the resource pool belong to the resource pool (i.e., in the case where not all resources belong to the resource pool), when the LBT failure indication of any RB set is received, the LBT failure detection timer associated with the resource pool is started or restarted, and the LBT failure counter associated with the resource pool is incremented by 1. That is to say, for the RB set in which a part of the resources belong to the resource pool, when counting the LBT failure times of the resource pool, the LBT failure indication of such an RB set in which a part of the resources belong to the resource pool needs to be considered.

For example, the RB sets belonging to a certain resource pool are R4, R5, and R6, where all resources of R4 and all resources of R5 belong to the resource pool, and a part of resources of R6 belong to the resource pool. When the LBT failure indication of R6 is received, the LBT failure detection timer associated with the resource pool may be started or restarted, and the LBT failure counter associated with the resource pool may be incremented by 1. That is to say, when the LBT failure indication of any one of the RB sets R4, R5, and R6 is received, the LBT failure detection timer associated with the resource pool is started or restarted, and the LBT failure counter associated with the resource pool is incremented by 1.

In some embodiments, in a case where a part of resources of any RB set in the RB set(s) belonging to the resource pool belong to the resource pool (i.e., in the case where not all resources belong to the resource pool), when the LBT failure indication of any RB set is received, the LBT failure detection timer associated with the resource pool is not started or restarted, and the LBT failure counter associated with the resource pool is not incremented by 1. That is to say, for the RB set in which a part of the resources belong to the resource pool, when counting the LBT failure times of the resource pool, there is no need to consider the LBT failure indication of such an RB set in which a part of the resources belong to the resource pool.

For example, the RB sets belonging to a certain resource pool are R4, R5, and R6, where all resources of R4 and all resources of R5 belong to the resource pool, and a part of resources of R6 belong to the resource pool. When the LBT failure indication of R6 is received, the LBT failure detection timer associated with the resource pool may not be started or restarted, and the LBT failure counter associated with the resource pool may not be incremented by 1. That is to say, only when the LBT failure indication of R4 or R5 is received, the LBT failure detection timer associated with the resource pool is started or restarted, and the LBT failure counter associated with the resource pool is incremented by 1.

In some embodiments, for the RB set in which a part of the resources belong to the resource pool (i.e., the RB set where not all resources belong to the resource pool), when counting the LBT failure times of the resource pool, whether to consider the LBT failure indication of the RB set in which a part of the resources belong to the resource pool may be implemented by the terminal as needed, or may be configured by the network device, which is not limited in the disclosure. For example, the network device may indicate to the terminal whether to consider the LBT failure indication of the RB set in which a part of the resources belong to the resource pool by configuring an indication parameter.

In the embodiments of the disclosure, the terminal may count, based on the LBT failure indication of the RB set belonging to the resource pool, the LBT failure times of the resource pool by using the LBT failure detection timer and the LBT failure counter associated with the resource pool, thereby implementing the SL consistent LBT failure detection with the granularity of the resource pool when the granularity of the resource pool is larger than the granularity of the RB set.

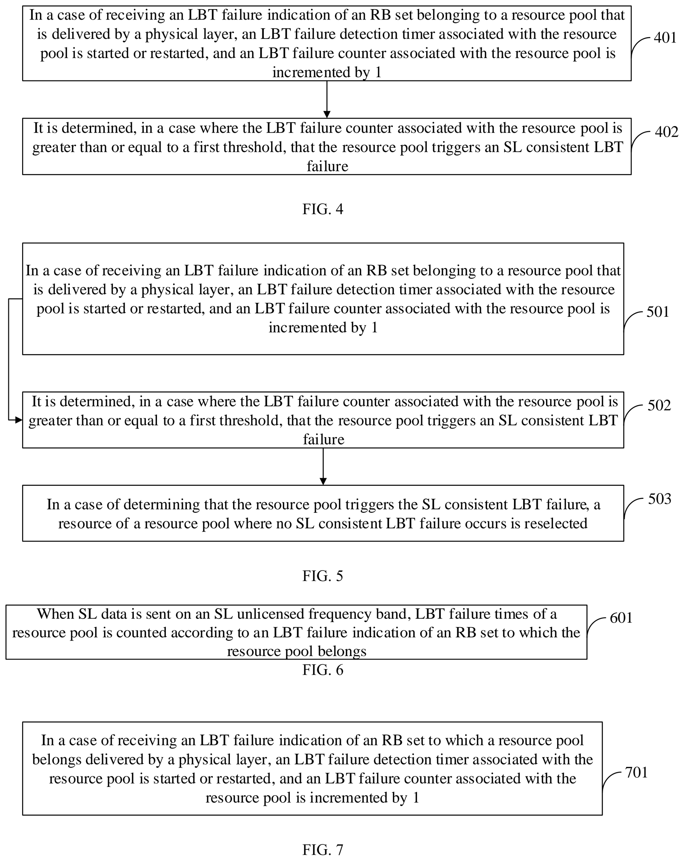

Referring to FIG. 4, FIG. 4 is a schematic flowchart of a method for counting SL consistent LBT failure times provided by an embodiment of the disclosure, and the method is performed by a terminal. As shown in FIG. 4, the method may include but is not limited to the following steps.

At step 401: in a case of receiving an LBT failure indication of an RB set belonging to a resource pool that is delivered by a physical layer, an LBT failure detection timer associated with the resource pool is started or restarted, and an LBT failure counter associated with the resource pool is incremented by 1.

In the embodiments of the disclosure, step 401 may be implemented using any of the implementations described in the various embodiments of the disclosure, which is not limited herein and will not be repeated.

At step 402: it is determined, in a case where the LBT failure counter associated with the resource pool is greater than or equal to a first threshold, that the resource pool triggers an SL consistent LBT failure.

In some embodiments of the disclosure, one resource pool of the terminal may be associated with at least one of: one LBT failure detection timer; one LBT failure counter; a single maximum count of LBT failures. That is, the terminal may maintain one or more of the one LBT failure detection timer, the one LBT failure counter, and the single maximum count of LBT failures for one resource pool. For example, for each resource pool, the terminal maintains the one LBT failure detection timer, the one LBT failure counter, and the single maximum count of LBT failures.

In some embodiments of the disclosure, in a case of receiving the LBT failure indication of the RB set belonging to the resource pool during the operation of the LBT failure detection timer associated with the resource pool, the terminal starts or restarts the LBT failure detection timer associated with the resource pool and increments the LBT failure counter associated with the resource pool by 1. During the operation of the LBT failure detection timer associated with the resource pool, when the LBT failure counter associated with the resource pool is greater than or equal to the first threshold, it may be determined that the resource pool triggers the SL consistent LBT failure. That is to say, when the LBT failure times of the resource pool is greater than or equal to the first threshold, it may be determined that the resource pool triggers the SL consistent LBT failure.

In some embodiments, other implementations in the above embodiments may be used to count the LBT failure times of the resource pool, and when the LBT failure counter associated with the resource pool is greater than or equal to the first threshold, it is determined that the resource pool triggers the SL consistent LBT failure.

In some embodiments of the disclosure, the first threshold may be configured by a network device or pre-configured. The first thresholds corresponding to different resource pools may be the same or different, which is not limited in the disclosure.

It should be noted that the first threshold in the disclosure may refer to the single maximum count of LBT failures associated with the resource pool. The maximum counts of LBT failures associated with different resource pools may be the same or different, which is not limited in the disclosure.

In the embodiments of the disclosure, in a case of receiving the LBT failure indication of the RB set belonging to the resource pool that is delivered by the physical layer, the terminal may start or restart the LBT failure detection timer associated with the resource pool and increment the LBT failure counter associated with the resource pool by 1. During the operation of the LBT failure detection timer associated with the resource pool, when the LBT failure counter associated with the resource pool is greater than or equal to the first threshold, it may be determined that the resource pool triggers the SL consistent LBT failure. Thus, when the granularity of the resource pool is larger than the granularity of the RB set, the SL consistent LBT failure detection with the granularity of the resource pool is implemented, and whether the resource pool triggers the SL consistent LBT failure may be determined according to the relationship between the LBT failure counter associated with the resource pool and the first threshold.

Referring to FIG. 5, FIG. 5 is a schematic flowchart of a method for counting SL consistent LBT failure times provided by an embodiment of the disclosure, and the method is performed by a terminal. As shown in FIG. 5, the method may include but is not limited to the following steps.

At step 501: in a case of receiving an LBT failure indication of an RB set belonging to a resource pool that is delivered by a physical layer, an LBT failure detection timer associated with the resource pool is started or restarted, and an LBT failure counter associated with the resource pool is incremented by 1.

At step 502: it is determined, in a case where the LBT failure counter associated with the resource pool is greater than or equal to a first threshold, that the resource pool triggers an SL consistent LBT failure.

In the embodiments of the disclosure, step 501 and step 502 may be implemented using any of the implementations described in the various embodiments of the disclosure, which is not limited herein and will not be repeated.

At step 503: in a case of determining that the resource pool triggers the SL consistent LBT failure, a resource of a resource pool where no SL consistent LBT failure occurs is reselected.

In some embodiments of the disclosure, when determining that the resource pool triggers the SL consistent LBT failure, the terminal may reselect the resource of the resource pool where no SL consistent LBT failure occurs (i.e., the resource pool in which the SL consistent LBT failure has not occurred). In other words, the terminal reselects the resource from the resource pool where no SL consistent LBT failure occurs.

In some embodiments of the disclosure, the terminal operates in mode2; that is to say, the terminal operating in mode2 may reselect, when determining that the resource pool triggers the SL consistent LBT failure, the resource of the resource pool where no SL consistent LBT failure occurs.

In the embodiments of the disclosure, the terminal may count the LBT failure times of the resource pool based on the LBT failure indication of the RB set belonging to the resource pool, thereby implementing the SL consistent LBT failure detection with the granularity of the resource pool. Additionally, the terminal may determine, based on the relationship between the LBT failure counter associated with the resource pool and the first threshold, whether the resource pool triggers the SL consistent LBT failure, and reselect, in a case of determining that the resource pool triggers the SL consistent LBT failure, the resource of the resource pool where no SL consistent LBT failure occurs, so as to ensure the normal operation of SL communication.

Referring to FIG. 6, FIG. 6 is a schematic flowchart of a method for counting SL consistent LBT failure times provided by an embodiment of the disclosure, and the method is performed by a terminal. As shown in FIG. 6, the method may include but is not limited to the following steps.

At step 601: when SL data is sent on an SL unlicensed frequency band, LBT failure times of a resource pool is counted according to an LBT failure indication of an RB set to which the resource pool belongs.

For the explanation of the SL data in the embodiments of the disclosure, reference may be made to the above-mentioned embodiments, and thus no further elaboration is provided herein.

In some embodiments of the disclosure, one or more resource pools and one or more RB sets may be configured for the terminal.

In some embodiments of the disclosure, the resource pool and the RB set may be configured for the terminal by the network device or be pre-configured, which is not limited in the disclosure.

In some embodiments of the disclosure, one resource pool may belong to one RB set, or may belong to a plurality of RB sets. That is to say, all resources of the resource pool may belong to one RB set, or a plurality of different parts of resources of the resource pool may respectively belong to different RB sets, which is not limited in the disclosure.

In some embodiments of the disclosure, one RB set may include one resource pool, or one RB set may also include a plurality of resource pools. One RB set may include all or part of the resources of one resource pool. One RB set may also include resources of a plurality of resource pools. For the plurality of resource pools included in one RB set, all or part of resources of these resource pools may belong to the one RB set, which is not limited in the disclosure.

In some embodiments of the disclosure, the granularity of the resource pool may be smaller than the granularity of the RB set. When the granularity of SL consistent LBT failure detection is the granularity of the resource pool, for each resource pool, the LBT failure times of the resource pool may be counted according to the LBT failure indication(s) of the RB set(s) to which the resource pool belongs. For example, when the resource pool belongs to one RB set (for instance, all resources of the resource pool belong to one RB set), the LBT failure times of the resource pool may be counted according to the LBT failure indication of the one RB set. For another example, when the resource pool belongs to a plurality of RB sets (for instance, a plurality of different parts of the resources of the resource pool belong to different RB sets respectively), the LBT failure times of the resource pool may be counted according to the LBT failure indication(s) of the plurality of RB sets.

For example, the LBT failure times of the resource pool may be determined according to the number of LBT failure indication(s) of the RB set(s) to which the resource pool belongs.

In some embodiments of the disclosure, one resource pool of the terminal may be associated with at least one of: one LBT failure detection timer; one LBT failure counter; a single maximum count of LBT failures. That is, the terminal may maintain one or more of the one LBT failure detection timer, the one LBT failure counter, and the single maximum count of LBT failures for one resource pool. For example, for each resource pool, the terminal maintains the one LBT failure detection timer, the one LBT failure counter, and the single maximum count of LBT failures.

In some embodiments of the disclosure, the maximum count of LBT failures associated with different resource pools may be the same or different, which is not limited in the disclosure.

In the embodiments of the disclosure, when the terminal transmits SL data on the SL unlicensed frequency band, the terminal may count the LBT failure times of the resource pool according to the LBT failure indication(s) of the RB set(s) to which the resource pool belongs. Thus, when the granularity of the resource pool is smaller than the granularity of the RB set, the LBT failure times of the resource pool are counted based on the LBT failure indication(s) of the RB set(s) to which the resource pool belongs, enabling the SL consistent LBT failure detection with the granularity of the resource pool.

Referring to FIG. 7, FIG. 7 is a schematic flowchart of a method for counting SL consistent LBT failure times provided by an embodiment of the disclosure, and the method is performed by a terminal. As shown in FIG. 7, the method may include but is not limited to the following steps.

At step 701: in a case of receiving an LBT failure indication of an RB set to which a resource pool belongs delivered by a physical layer, an LBT failure detection timer associated with the resource pool is started or restarted, and an LBT failure counter associated with the resource pool is incremented by 1.

In some embodiments of the disclosure, one or more resource pools and one or more RB sets may be configured for the terminal.

In some embodiments of the disclosure, the resource pool and the RB set may be configured for the terminal by the network device or be pre-configured, which is not limited in the disclosure.

In some embodiments of the disclosure, one resource pool may belong to one RB set, or may belong to a plurality of RB sets. That is to say, all resources of the resource pool may belong to one RB set, or a plurality of different parts of resources of the resource pool may respectively belong to different RB sets, which is not limited in the disclosure.

In some embodiments of the disclosure, one RB set may include one resource pool, or one RB set may also include a plurality of resource pools. One RB set may include all or part of the resources of one resource pool. One RB set may also include resources of a plurality of resource pools. For the plurality of resource pools included in one RB set, all or part of resources of these resource pools may belong to the one RB set, which is not limited in the disclosure.

In some embodiments of the disclosure, one resource pool of the terminal may be associated with at least one of: one LBT failure detection timer; one LBT failure counter; a single maximum count of LBT failures. That is, the terminal may maintain one or more of the one LBT failure detection timer, the one LBT failure counter, and the single maximum count of LBT failures for one resource pool. For example, for each resource pool, the terminal maintains the one LBT failure detection timer, the one LBT failure counter, and the single maximum count of LBT failures.

In some embodiments of the disclosure, the maximum count of LBT failures associated with different resource pools may be the same or different, which is not limited in the disclosure.

In the embodiments of the disclosure, the granularity of the resource pool may be smaller than the granularity of the RB set. When the granularity of SL consistent LBT failure detection is the resource pool granularity, for each resource pool, the terminal may count, according to the LBT failure indication of the RB set to which the resource pool belongs, the LBT failure times of the resource pool by using the LBT failure detection timer associated with the resource pool and the LBT failure counter associated with the resource pool. The LBT failure counter associated with the resource pool is used to count the LBT failure times of the resource pool, and an initial value of the LBT failure counter associated with the resource pool may be zero.

In some embodiments of the disclosure, before the terminal sends SL data each time, the physical layer of the terminal may first perform LBT failure detection on the RB set. If the LBT fails, the physical layer of the terminal will deliver the LBT failure indication of the RB set to a MAC layer. Each time the MAC layer of the terminal receives the LBT failure indication of the RB set to which the resource pool belongs that is delivered by the physical layer, the LBT failure detection timer associated with the resource pool may be started or restarted, and the LBT failure counter associated with the resource pool is incremented by 1. When the LBT failure detection timer associated with the resource pool times out, the LBT failure counter may be reset to 0.

In some embodiments, in a case where all resources of the resource pool belong to any RB set, when the LBT failure indication of any RB set is received, the LBT failure detection timer associated with the resource pool is started or restarted, and the LBT failure counter associated with the resource pool is incremented by 1.

In some embodiments, in a case where a part of the resources of a resource pool belong to any RB set, when the LBT failure indication of any RB set delivered by the physical layer, the LBT failure detection timer associated with the resource pool is started or restarted, and the LBT failure counter associated with the resource pool is incremented by 1. That is to say, for the resource pool in which a part of the resources belong to a certain RB set, when counting the LBT failure times of the resource pool, the LBT failure indication of such an RB set needs to be considered.

For example, a resource pool has part of its resources belonging to an RB set a1, another part belonging to an RB set a2, and the remaining part belonging to an RB set a3. The initial value of the LBT failure counter associated with this resource pool is 0. When the LBT failure indication of a1 delivered by the physical layer is received, the LBT failure detection timer associated with the resource pool is started, and the LBT failure counter associated with the resource pool is incremented by 1, so that the LBT failure times of this resource pool is 1. Subsequently, when the LBT failure indication of a2 delivered by the physical layer is received during the operation of the LBT failure detection timer associated with the resource pool, the LBT failure detection timer associated with the resource pool is restarted, and the LBT failure counter associated with the resource pool is incremented by 1, so that the LBT failure times of this resource pool is 2. Then, when the LBT failure indication of al delivered by the physical layer is received during the operation of the LBT failure detection timer associated with the resource pool, the LBT failure detection timer associated with the resource pool is restarted, and the LBT failure counter associated with the resource pool is incremented by 1, so that the LBT failure times of this resource pool is 3.

In some embodiments, in a case where there are a plurality of RB sets to which the resource pool belongs, when the LBT failure indication of a target RB set among the plurality of RB sets is received, the LBT failure detection timer associated with the resource pool may be started or restarted, and the LBT failure counter associated with the resource pool may be incremented by 1.

The target RB set may be an RB set that covers the most resources of the resource pool among the plurality of RB sets to which the resource pool belongs, or may be other RB sets excluding the one that covers the least resources of the resource pool among the plurality of RB sets to which the resource pool belongs, or may also be an RB set that meets other conditions, which is not limited in the disclosure.

For example, the RB sets to which the resource pool belongs are a4, a5, and a6, where a4 covers 80% of the resources of the resource pool, a5 covers 10% of the resources of the resource pool, and a6 covers 10% of the resources of the resource pool. Only upon receiving the LBT failure indication of a4, the LBT failure detection timer associated with the resource pool may be started or restarted and the LBT failure counter associated with the resource pool may be incremented by 1.

In some embodiments, in a case where there are a plurality of RB sets to which the resource pool belongs, the LBT failure indication(s) of which RB set(s) among the plurality of RB sets needs to be considered may be implemented by the terminal as needed or configured by the network device, which is not limited in the disclosure. For example, the network device may indicate, by configuring an indication parameter, the LBT failure indication(s) of which RB set(s) among the plurality of RB sets to which the resource pool belongs should be considered by the terminal. For example, the indication parameter may be an ID of the RB set.

In the embodiments of the disclosure, the terminal may count, based on the LBT failure indication of the RB set to which the resource pool belongs, the LBT failure times of the resource pool using the LBT failure detection timer and LBT failure counter associated with the resource pool, thereby implementing the SL consistent LBT failure detection with the granularity of the resource pool when the granularity of the resource pool is smaller than the granularity of the RB set.

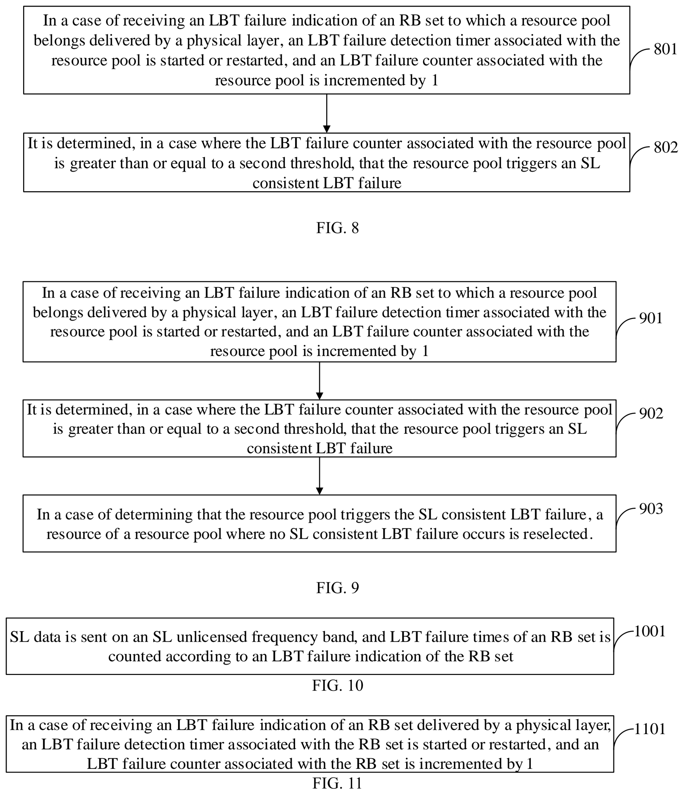

Referring to FIG. 8, FIG. 8 is a schematic flowchart of a method for counting SL consistent LBT failure times provided by an embodiment of the disclosure, and the method is performed by a terminal. As shown in FIG. 8, the method may include but is not limited to the following steps.

At step 801: in a case of receiving an LBT failure indication of an RB set to which a resource pool belongs delivered by a physical layer, an LBT failure detection timer associated with the resource pool is started or restarted, and an LBT failure counter associated with the resource pool is incremented by 1.

In the embodiments of the disclosure, step 801 may be implemented using any of the implementations described in the various embodiments of the disclosure, which is not limited herein and will not be repeated.

At step 802: it is determined, in a case where the LBT failure counter associated with the resource pool is greater than or equal to a second threshold, that the resource pool triggers an SL consistent LBT failure.

In some embodiments of the disclosure, one resource pool of the terminal may be associated with at least one of: one LBT failure detection timer; one LBT failure counter; a single maximum count of LBT failures. That is, the terminal may maintain one or more of the one LBT failure detection timer, the one LBT failure counter, and the single maximum count of LBT failures for one resource pool. For example, for each resource pool, the terminal maintains the one LBT failure detection timer, the one LBT failure counter, and the single maximum count of LBT failures.

In some embodiments of the disclosure, in a case of receiving the LBT failure indication of the RB set to which the resource pool belongs during the operation of the LBT failure detection timer associated with the resource pool, the terminal starts or restarts the LBT failure detection timer associated with the resource pool and increments the LBT failure counter associated with the resource pool by 1. During the operation of the LBT failure detection timer associated with the resource pool, when the LBT failure counter associated with the resource pool is greater than or equal to the second threshold, it may be determined that the resource pool triggers the SL consistent LBT failure. That is to say, when the LBT failure times of the resource pool is greater than or equal to the second threshold, it may be determined that the resource pool triggers the SL consistent LBT failure.

In some embodiments, other implementations in the above embodiments may be used to count the LBT failure times of the resource pool, and when the LBT failure counter associated with the resource pool is greater than or equal to the second threshold, it is determined that the resource pool triggers the SL consistent LBT failure.

In some embodiments of the disclosure, the second threshold may be configured by a network device or pre-configured. The second thresholds corresponding to different resource pools may be the same or different, which is not limited in the disclosure.

It should be noted that the second threshold in the disclosure may refer to the single maximum count of LBT failures associated with the resource pool. The maximum counts of LBT failures associated with different resource pools may be the same or different, which is not limited in the disclosure.

In the embodiments of the disclosure, when the LBT failure counter associated with the resource pool is greater than or equal to the second threshold, the terminal may determine that the resource pool triggers the SL consistent LBT failure. Thus, when the granularity of the resource pool is smaller than the granularity of the RB set, whether the resource pool triggers the SL consistent LBT failure may be determined according to the relationship between the LBT failure counter associated with the resource pool and the second threshold.

Referring to FIG. 9, FIG. 9 is a schematic flowchart of a method for counting SL consistent LBT failure times provided by an embodiment of the disclosure, and the method is performed by a terminal. As shown in FIG. 9, the method may include but is not limited to the following steps.

At step 901: in a case of receiving an LBT failure indication of an RB set to which a resource pool belongs delivered by a physical layer, an LBT failure detection timer associated with the resource pool is started or restarted, and an LBT failure counter associated with the resource pool is incremented by 1.

At step 902: it is determined, in a case where the LBT failure counter associated with the resource pool is greater than or equal to a second threshold, that the resource pool triggers an SL consistent LBT failure.

In the embodiments of the disclosure, step 901 and step 902 may be implemented using any of the implementations described in the various embodiments of the disclosure, which is not limited herein and will not be repeated.

At step 903: in a case of determining that the resource pool triggers the SL consistent LBT failure, a resource of a resource pool where no SL consistent LBT failure occurs is reselected.

In some embodiments of the disclosure, when determining that the resource pool triggers the SL consistent LBT failure, the terminal may reselect the resource of the resource pool where no SL consistent LBT failure occurs (i.e., the resource pool in which the SL consistent LBT failure has not occurred). In other words, the terminal reselects the resource from the resource pool where no SL consistent LBT failure occurs.

In some embodiments of the disclosure, the terminal operates in mode2; that is to say, the terminal operating in mode2 may reselect, when determining that the resource pool triggers the SL consistent LBT failure, the resource of the resource pool where no SL consistent LBT failure occurs.

In some embodiments, when it is determined that the resource pool triggers the SL consistent LBT failure, the resource of the resource pool where no SL consistent LBT failure occurs within the RB set to which the resource pool belongs may be reselected.

For example, the RB set to which a resource pool A belongs is an RB set b1, and the RB set b1 also includes resources of a resource pool B and resources of a resource pool C. When it is determined that resource pool A triggers the SL consistent LBT failure, the resources of the resource pools B and C where no SL consistent LBT failure occurs may be reselected.

In some embodiments, when all other resource pools in the RB set to which the resource pool belongs have experienced the SL consistent LBT failure, the resource of the RB set where no SL consistent LBT failure occurs may be reselected from other RB sets.

In some embodiments, when it is determined that the resource pool triggers the SL consistent LBT failure, the resource of the resource pool where no SL consistent LBT failure occurs within an RB set other than the RB set to which the resource pool belongs may be reselected.

In some embodiments, when it is determined that the resource pool triggers the SL consistent LBT failure, the resource of the resource pool where no SL consistent LBT failure occurs in the RB set to which the resource pool belongs may be reselected preferentially. When it is not possible to reselect such resource of the resource pool where no SL consistent LBT failure occurs in the RB set to which the resource pool belongs, the resource of the resource pool where no SL consistent LBT failure occurs within the RB set other than the RB set to which the resource pool belongs may be reselected.

In some embodiments, when it is determined that the resource pool triggers the SL consistent LBT failure, the resource of the resource pool where no SL consistent LBT failure occurs within the RB set other than the RB set to which the resource pool belongs may be reselected preferentially. When it is not possible to reselect such resource of the resource pool where no SL consistent LBT failure occurs within the RB set other than the RB set to which the resource pool belongs, the resource of the resource pool where no SL consistent LBT failure occurs in the RB set to which the resource pool belongs may be reselected.

In the embodiments of the disclosure, the terminal may count the LBT failure times of the resource pool based on the LBT failure indication of the RB set to which the resource pool belongs, thereby implementing the SL consistent LBT failure detection with the granularity of the resource pool. Additionally, the terminal may determine, based on the relationship between the LBT failure counter associated with the resource pool and the second threshold, whether the resource pool triggers the SL consistent LBT failure, and reselect, in a case of determining that the resource pool triggers the SL consistent LBT failure, the resource of the resource pool, so as to ensure the normal operation of SL communication.

Referring to FIG. 10, FIG. 10 is a schematic flowchart of a method for counting SL consistent LBT failure times provided by an embodiment of the disclosure, and the method is performed by a terminal. As shown in FIG. 10, the method may include but is not limited to the following steps.

At step 1001: SL data is sent on an SL unlicensed frequency band, and LBT failure times of an RB set is counted according to an LBT failure indication of the RB set.

For the explanation of the SL data in the embodiments of the disclosure, reference may be made to the above-mentioned embodiments, and thus no further elaboration is provided herein.

In some embodiments of the disclosure, one or more resource pools and one or more RB sets may be configured for the terminal.

In some embodiments of the disclosure, the resource pool and the RB set may be configured for the terminal by the network device or be pre-configured, which is not limited in the disclosure.

In some embodiments of the disclosure, the granularity of a resource pool may be larger than the granularity of the RB set. For example, one RB set may belong to one resource pool or to a plurality of resource pools. That is to say, all resources of the RB set may belong to one resource pool, or a plurality of different parts of the resources of the RB set may respectively belong to different resource pools, which is not limited in the disclosure. For example, one resource pool may include one RB set, or one resource pool may include a plurality of RB sets. One resource pool may include all or part of the resources of one RB set. One resource pool may include resources of a plurality of RB sets. For the plurality of RB sets included in one resource pool, all or part of resources of those RB sets may belong to the one resource pool, which is not limited in the disclosure.

In some embodiments of the disclosure, the granularity of a resource pool may be smaller than the granularity of the RB set. For example, one resource pool may belong to one RB set, or may belong to a plurality of RB sets. That is to say, all resources of the resource pool may belong to one RB set, or a plurality of different parts of resources of the resource pool may respectively belong to different RB sets, which is not limited in the disclosure. For example, one RB set may include one resource pool, or one RB set may also include a plurality of resource pools. One RB set may include all or part of the resources of one resource pool. One RB set may also include resources of a plurality of resource pools. For the plurality of resource pools included in one RB set, all or part of resources of these resource pools may belong to the one RB set, which is not limited in the disclosure.

In some embodiments of the disclosure, for each RB set, the LBT failure times of the RB set may be counted based on the LBT failure indication of the RB set. For example, the LBT failure times of the RB set may be determined according to the number of LBT failure indications of the RB set.

In some embodiments of the disclosure, one RB set of the terminal may be associated with at least one of: one LBT failure detection timer; one LBT failure counter; a single maximum count of LBT failures. That is, the terminal may maintain one or more of the one LBT failure detection timer, the one LBT failure counter, and the single maximum count of LBT failures for one RB set. For example, for each RB set, the terminal maintains the one LBT failure detection timer, the one LBT failure counter, and the single maximum count of LBT failures.

In some embodiments of the disclosure, the maximum count of LBT failures associated with different RB sets may be the same or different, which is not limited in the disclosure.

In the embodiments of the disclosure, when the terminal transmits the SL data on the SL unlicensed frequency band, the terminal may count the LBT failure times of the RB set based on the LBT failure indication of the RB set, thereby implementing the SL consistent LBT failure detection with the granularity of the RB set.

Referring to FIG. 11, FIG. 11 is a schematic flowchart of a method for counting SL consistent LBT failure times provided by an embodiment of the disclosure, and the method is performed by a terminal. As shown in FIG. 11, the method may include but is not limited to the following steps.

At step 1101: in a case of receiving an LBT failure indication of an RB set delivered by a physical layer, an LBT failure detection timer associated with the RB set is started or restarted, and an LBT failure counter associated with the RB set is incremented by 1.

In some embodiments of the disclosure, one or more resource pools and one or more RB sets may be configured for the terminal.

In some embodiments of the disclosure, the resource pool and the RB set may be configured for the terminal by the network device or be pre-configured, which is not limited in the disclosure.

In some embodiments of the disclosure, the granularity of a resource pool may be larger than the granularity of the RB set. For example, one RB set may belong to one resource pool or to a plurality of resource pools. That is to say, all resources of the RB set may belong to one resource pool, or a plurality of different parts of the resources of the RB set may respectively belong to different resource pools, which is not limited in the disclosure. For example, one resource pool may include one RB set, or one resource pool may include a plurality of RB sets. One resource pool may include all or part of the resources of one RB set. One resource pool may include resources of a plurality of RB sets. For the plurality of RB sets included in one resource pool, all or part of resources of those RB sets may belong to the one resource pool, which is not limited in the disclosure.

In some embodiments of the disclosure, the granularity of a resource pool may be smaller than the granularity of the RB set. For example, one resource pool may belong to one RB set, or may belong to a plurality of RB sets. That is to say, all resources of the resource pool may belong to one RB set, or a plurality of different parts of resources of the resource pool may respectively belong to different RB sets, which is not limited in the disclosure. For example, one RB set may include one resource pool, or one RB set may also include a plurality of resource pools. One RB set may include all or part of the resources of one resource pool. One RB set may also include resources of a plurality of resource pools. For the plurality of resource pools included in one RB set, all or part of resources of these resource pools may belong to the one RB set, which is not limited in the disclosure.

In some embodiments of the disclosure, one RB set of the terminal may be associated with at least one of: one LBT failure detection timer; one LBT failure counter; a single maximum count of LBT failures. That is, the terminal may maintain one or more of the one LBT failure detection timer, the one LBT failure counter, and the single maximum count of LBT failures for one RB set. For example, for each RB set, the terminal maintains the one LBT failure detection timer, the one LBT failure counter, and the single maximum count of LBT failures.

In some embodiments of the disclosure, the maximum count of LBT failures associated with different RB sets may be the same or different, which is not limited in the disclosure.

In the embodiments of the disclosure, when the granularity of SL consistent LBT failure detection is the RB set granularity, for each RB set, the terminal may count, according to the LBT failure indication of the RB set, the LBT failure times of the RB set by using the LBT failure detection timer associated with the RB set and the LBT failure counter associated with the RB set. The LBT failure counter associated with the RB set is used to count the LBT failure times of the RB set, and an initial value of the LBT failure counter associated with the RB set may be zero.

In some embodiments of the disclosure, before the terminal sends SL data each time, the physical layer of the terminal may first perform LBT failure detection on the RB set. If the LBT fails, the physical layer of the terminal will deliver the LBT failure indication of the RB set to a MAC layer. Each time the MAC layer of the terminal receives the LBT failure indication of the RB set delivered by the physical layer, the LBT failure detection timer associated with the RB set may be started or restarted, and the LBT failure counter associated with the RB set is incremented by 1.

For example, when the LBT failure indication of a certain RB set delivered by the physical layer is received, the LBT failure detection timer associated with this RB set is started, and the LBT failure counter associated with this RB set is incremented by 1. At this point, the LBT failure times of this RB set is 1. Subsequently, when the LBT failure indication of this RB set delivered by the physical layer is received during the operation of the LBT failure detection timer associated with this RB set, the LBT failure detection timer associated with this RB set is restarted, and the LBT failure counter associated with this RB set is incremented by 1. At this point, the number of LBT failures of this RB set is 2.

In the embodiments of the disclosure, the terminal may count, based on the LBT failure indication of the RB set, the LBT failure times of the RB set by using the LBT failure detection timer and the LBT failure counter associated with the RB set, thereby implementing the SL consistent LBT failure detection with the granularity of the RB set.

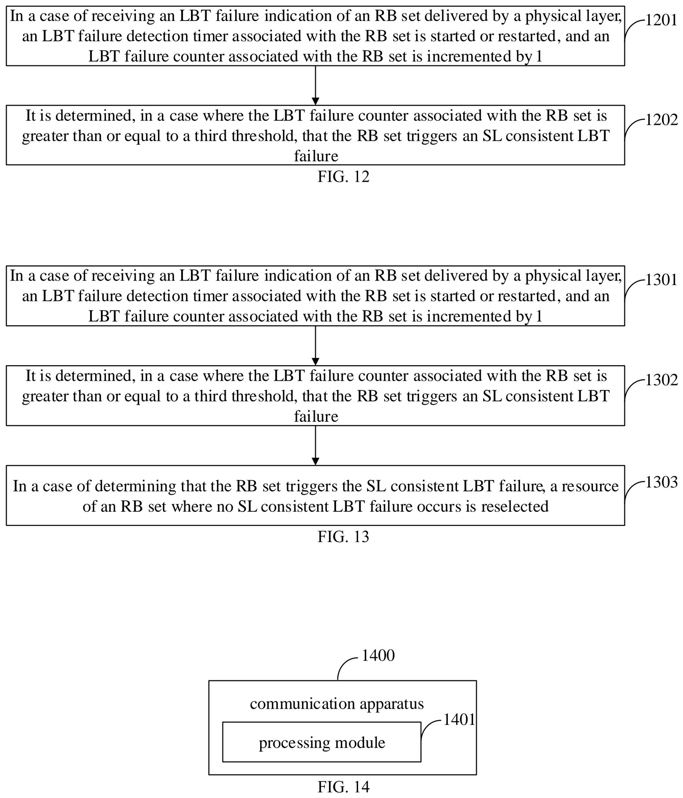

Referring to FIG. 12, FIG. 12 is a schematic flowchart of a method for counting SL consistent LBT failure times provided by an embodiment of the disclosure, and the method is performed by a terminal. As shown in FIG. 12, the method may include but is not limited to the following steps.

At step 1201: in a case of receiving an LBT failure indication of an RB set delivered by a physical layer, an LBT failure detection timer associated with the RB set is started or restarted, and an LBT failure counter associated with the RB set is incremented by 1.

In the embodiments of the disclosure, step 1201 may be implemented using any of the implementations described in the various embodiments of the disclosure, which is not limited herein and will not be repeated.

At step 1202: it is determined, in a case where the LBT failure counter associated with the RB set is greater than or equal to a third threshold, that the RB set triggers an SL consistent LBT failure.

In some embodiments of the disclosure, one RB set of the terminal may be associated with at least one of: one LBT failure detection timer; one LBT failure counter; a single maximum count of LBT failures. That is, the terminal may maintain one or more of the one LBT failure detection timer, the one LBT failure counter, and the single maximum count of LBT failures for one RB set. For example, for each RB set, the terminal maintains the one LBT failure detection timer, the one LBT failure counter, and the single maximum count of LBT failures.

In some embodiments of the disclosure, in a case of receiving the LBT failure indication of the RB set during the operation of the LBT failure detection timer associated with the RB set, the terminal starts or restarts the LBT failure detection timer associated with the RB set and increments the LBT failure counter associated with the RB set by 1. During the operation of the LBT failure detection timer associated with the RB set, when the LBT failure counter associated with the RB set is greater than or equal to the third threshold, it may be determined that the RB set triggers the SL consistent LBT failure. That is to say, when the LBT failure times of the RB set is greater than or equal to the third threshold, it may be determined that the RB set triggers the SL consistent LBT failure.

In some embodiments of the disclosure, the third threshold may be configured by the network device or pre-configured. The third thresholds corresponding to different RB sets may be the same or different, which is not limited in the disclosure.

It should be noted that the third threshold in the disclosure may refer to the single maximum count of LBT failures associated with the RB set. The maximum counts of LBT failures associated with different RB sets may be the same or different, which is not limited in the disclosure.

In the embodiments of the disclosure, when the LBT failure counter associated with the RB set is greater than or equal to the third threshold, the terminal may determine that the RB set triggers the SL consistent LBT failure. Thus, whether the RB set triggers the SL consistent LBT failure may be determined according to the relationship between the LBT failure counter associated with the RB set and the third threshold.

Referring to FIG. 13, FIG. 13 is a schematic flowchart of a method for counting SL consistent LBT failure times provided by an embodiment of the disclosure, and the method is performed by a terminal. As shown in FIG. 13, the method may include but is not limited to the following steps.

At step 1301: in a case of receiving an LBT failure indication of an RB set delivered by a physical layer, an LBT failure detection timer associated with the RB set is started or restarted, and an LBT failure counter associated with the RB set is incremented by 1.

At step 1302: it is determined, in a case where the LBT failure counter associated with the RB set is greater than or equal to a third threshold, that the RB set triggers an SL consistent LBT failure.

In the embodiments of the disclosure, step 1301 and step 1302 may be implemented using any of the implementations described in the various embodiments of the disclosure, which is not limited herein and will not be repeated.

At step 1303: in a case of determining that the RB set triggers the SL consistent LBT failure, a resource of an RB set where no SL consistent LBT failure occurs is reselected.

In some embodiments of the disclosure, when determining that the RB set triggers the SL consistent LBT failure, the terminal may reselect the resource of the RB set where no SL consistent LBT failure occurs. In other words, the terminal reselects the resource from the RB set where no SL consistent LBT failure occurs.

In some embodiments of the disclosure, the terminal operates in mode2; that is to say, the terminal operating in mode2 may reselect, when determining that the RB set triggers the SL consistent LBT failure, the resource of the RB set where no SL consistent LBT failure occurs.

In some embodiments, the granularity of the resource pool is larger than the granularity of the RB set. When it is determined that the RB set triggers the SL consistent LBT failure, the resource of the RB set where no SL consistent LBT failure occurs within a resource pool to which the RB set belongs may be reselected.

In some embodiments, if all other RB sets in the resource pool to which the RB set belongs have experienced the SL consistent LBT failure, the resource of the RB set where no SL consistent LBT failure occurs may be reselected from other resource pools.

In some embodiments, the granularity of the resource pool is larger than the granularity of the RB set. When it is determined that the RB set triggers the SL consistent LBT failure, the resource of the RB set where no SL consistent LBT failure occurs within a resource pool other than a resource pool to which the RB set belongs may be reselected.

In some embodiments, the granularity of the resource pool is larger than the granularity of the RB set. When it is determined that the RB set triggers the SL consistent LBT failure, the resource of the RB set where no SL consistent LBT failure occurs within the resource pool to which the RB set belongs may be reselected preferentially. When it is not possible to reselect such resource of the RB set where no SL consistent LBT failure occurs within the resource pool to which the RB set belongs, the resource of the RB set where no SL consistent LBT failure occurs within the resource pool other than the resource pool to which the RB set belongs may be reselected.

In some embodiments, the granularity of the resource pool is larger than the granularity of the RB set. When it is determined that the RB set triggers the SL consistent LBT failure, the resource of the RB set where no SL consistent LBT failure occurs within the resource pool other than the resource pool to which the RB set belongs may be reselected preferentially. When it is not possible to reselect such resource of the RB set where no SL consistent LBT failure occurs within the resource pool other than the resource pool to which the RB set belongs, the resource of the RB set where no SL consistent LBT failure occurs within the resource pool to which the RB set belongs may be reselected.

In some embodiments, the granularity of the resource pool is smaller than the granularity of the RB set. When it is determined that the RB set triggers the SL consistent LBT failure, the resource of the RB set where no SL consistent LBT failure occurs may be reselected.

In the embodiments of the disclosure, the terminal may count the LBT failure times of the RB set based on the LBT failure indication of the RB set, thereby implementing the SL consistent LBT failure detection with the granularity of the RB set. Additionally, the terminal may determine, based on the relationship between the LBT failure counter associated with the RB set and the third threshold, whether the RB set triggers the SL consistent LBT failure, and reselect, in a case of determining that the RB set triggers the SL consistent LBT failure, the resource of the RB set, so as to ensure the normal operation of SL communication.

To facilitate understanding of the method for counting the SL consistent LBT failure times in the embodiments of the disclosure, the following description is provided in conjunction with the embodiments below.

In an optional embodiment, the granularity of the SL consistent LBT failure detection is the granularity of the resource pool, and the number of LBT failures of all RB sets belonging to this resource pool is counted.

In some embodiments, the terminal maintains an LBT_RP_counter variable for each resource pool, with an initial value of 0. The terminal also maintains one LBT failure detection timer for each resource pool. When the terminal receives the LBT failure indication of the RB set belonging to this resource pool that is delivered by the physical layer, the terminal starts or restarts the LBT failure detection timer associated with the resource pool and increments the LBT_RP_counter by 1. When the LBT_RP_counter is greater than or equal to the maximum count of LBT failures, the terminal determines that the resource pool triggers the SL consistent LBT failure.

In some embodiments, when an RB set partially (but not entirely) belongs to this resource pool, the terminal also needs to count this RB set when counting the LBT failure times of the resource pool. Another possible implementation is that when only a part of an RB set belongs to this resource pool, the terminal does not count this RB set when counting the LBT failure times of the resource pool. In some embodiments, the decision to count or not count the RB set may be implemented by the terminal. Alternatively, the network side may configure whether to count such an RB set under such circumstances. For example, the network may indicate to the terminal whether to count such an RB set by configuring an indication parameter.

In an optional embodiment, the granularity of the SL consistent LBT failure detection is the granularity of the resource pool, and the LBT failure times of the RB sets to which the resource pool belongs is counted.

In some embodiments, the terminal maintains an LBT_RP_counter variable for each resource pool, with an initial value of 0. The terminal also maintains one LBT failure detection timer for each resource pool. When the terminal receives the LBT failure indication of the RB set to which the resource pool belongs that is delivered by the physical layer, the terminal starts or restarts the LBT failure detection timer associated with the resource pool and increments the LBT_RP_counter by 1. When the LBT_RP_counter is greater than or equal to the maximum count of LBT failures, the terminal determines that the resource pool triggers the consistent LBT failure.

In some embodiments, when a resource pool partially belongs to one RB set and the other part of the resource pool belongs to another one or more RB sets, the terminal also needs to consider the more than one RB set when counting the LBT failure times of the resource pool. That is to say, the LBT failure indication of any one of the more than one RB sets needs to be counted into the LBT failure times of the resource pool. Another possible implementation is that the terminal only considers an RB set with the largest coverage when counting the LBT failure times of the resource pool. For example, when most of the resources of the resource pool belong to an RB set 1, the terminal only considers the RB set 1 when counting the LBT failure times of the resource pool. In some embodiments, under such circumstances, the decision on which RB set(s) to count or not count may be implemented by the terminal. In some embodiments, the network side may configure whether to count the more than one RB set under such circumstances. For example, the network may indicate to the terminal whether to count the more than one RB set by configuring an indication parameter.

In some embodiments, the granularity of SL consistent LBT failure detection is the granularity the resource pool. When the resource pool triggers the SL consistent LBT failure, the terminal reselects the resource of a resource pool where no SL consistent LBT failure occurs within the RB set to which the resource pool belongs.

In some embodiments, the granularity of SL consistent LBT failure detection is the granularity the resource pool. When the resource pool triggers the SL consistent LBT failure, the terminal reselects the resource of a resource pool where no SL consistent LBT failure occurs within an RB set other than the RB set to which the resource pool belongs.

In some embodiments, when the granularity of the resource pool is larger than the granularity of the RB set, and the resource pool triggers the SL consistent LBT failure, the terminal reselects the resource from the resource pool where no SL consistent LBT failure occurs.

In some embodiments, the granularity of the SL consistent LBT failure detection is the granularity of the RB set, and both the LBT failure detection counter variable and the LBT failure detection timer are maintained at the granularity of the RB set.

In some embodiments, the terminal maintains an LBT_RB set_counter variable for each RB set, and the initial value of this variable is 0. The terminal maintains an LBT failure detection timer for each RB set. When the terminal receives the LBT failure indication of the RB set delivered by the physical layer, the terminal starts or restarts the LBT failure detection timer associated with the RB set, and increments the LBT_RB set_counter by 1. When the LBT_RB set_counter is greater than or equal to the maximum count of LBT failures, the terminal determines that the RB set triggers the SL consistent LBT failure.

In some embodiments, the granularity of the SL consistent LBT failure detection is the granularity of the RB set. When the RB set triggers the SL consistent LBT failure, the terminal reselects the resource from an RB set where no SL consistent LBT failure occurs within the resource pool to which the RB set belongs.

In some embodiments, when the terminal operating in mode 2 detects that the RB set triggers the SL consistent LBT failure, the terminal reselects the resource from the RB set where no SL consistent LBT failure occurs within the resource pool to which the RB set triggering the SL consistent LBT failure belongs. When no RB set may be selected from the said resource pool, the terminal reselects the resource from an RB set where no SL consistent LBT failure occurs within other resource pools.

In some embodiments, the granularity of the SL consistent LBT failure detection is the granularity of the RB set. When the RB set triggers the SL consistent LBT failure, the terminal reselects the resource from an RB set where no SL consistent LBT failure occurs within a resource pool other than the resource pool to which the RB set belongs.

In some embodiments, when the terminal operating in mode 2 detects that the RB set triggers the SL consistent LBT failure, the terminal reselects the resource from the RB set where no SL consistent LBT failure occurs within the resource pool other than the resource pool to which the RB set triggering the SL consistent LBT failure belongs.

In some embodiments, when the granularity of the RB set is larger than the granularity of the resource pool, and the RB set triggers the SL consistent LBT failure, the terminal reselects the resource from the resource pool where no SL consistent LBT failure occurs.

Referring to FIG. 14, FIG. 14 is a schematic diagram of a communication apparatus provided by an embodiment of the disclosure. The communication apparatus 1400 shown in FIG. 14 may include a processing module 1401. In addition, the communication apparatus 1400 may further include a transceiver module, which may include a transmitting module and/or a receiving module. The transmitting module is configured to implement a sending function, the receiving module is configured to implement a receiving function, and the transceiver module may implement the sending function and/or the receiving function.

It may be understood that the communication apparatus 1400 may be a terminal, an apparatus in a terminal, or an apparatus that may be used in conjunction with a terminal.

The communication apparatus 1400 is on a terminal side.

The processing module 1401 is configured to, in a case of sending SL data on an SL unlicensed frequency band, count LBT failure times of a resource pool according to an LBT failure indication of an RB set belonging to the resource pool.

In some embodiments, the processing module 1401 is configured to, in a case of receiving the LBT failure indication of the RB set belonging to the resource pool that is delivered by a physical layer, start or restart an LBT failure detection timer associated with the resource pool, and increment an LBT failure counter associated with the resource pool by 1.

In some embodiments, the processing module 1401 is configured to:
in a case where a part of resources in any RB set belongs to the resource pool and the LBT failure indication of the RB set is received, start or restart an LBT failure detection timer associated with the resource pool, and increment an LBT failure counter associated with the resource pool by 1; or
in a case where a part of resources in any RB set belongs to the resource pool and the LBT failure indication of the RB set is received, not start and not restart the LBT failure detection timer associated with the resource pool, and not increment the LBT failure counter associated with the resource pool by 1.

In some embodiments, the processing module 1401 is configured to, in a case where the LBT failure counter associated with the resource pool is greater than or equal to a first threshold, determine that the resource pool triggers an SL consistent LBT failure.

In some embodiments, the processing module 1401 is configured to, in a case of determining that the resource pool triggers an SL consistent LBT failure, reselect a resource from a resource pool where no SL consistent LBT failure occurs.

In some embodiments, one resource pool is associated with at least one of:
one LBT failure detection timer;
one LBT failure counter; or
a single maximum count of LBT failures.

In some embodiments, one resource pool comprises one or more RB sets.

In some embodiments, the transceiver module may be configured to receive the LBT failure detection timer configured by a network device for the resource pool.

In some embodiments, the transceiver module may be configured to receive a first threshold configured by the network device for the resource pool.

In the embodiments of the disclosure, when the terminal transmits SL data on the SL unlicensed frequency band, the terminal may count the LBT failure times of the resource pool according to the LBT failure indication(s) of the RB set(s) belonging to the resource pool. Thus, when the granularity of the resource pool is larger than the granularity of the RB set, the LBT failure times of the resource pool are counted based on the LBT failure indication(s) of the RB set(s) belonging to the resource pool, enabling the SL consistent LBT failure detection with the granularity of the resource pool.

It may be understood that the communication apparatus 1400 may be a terminal, an apparatus in a terminal, or an apparatus that may be used in conjunction with a terminal.

The communication apparatus 1400 is on a terminal side.

The processing module 1401 is configured to, in a case of sending SL data on an SL unlicensed frequency band, count LBT failure times of a resource pool according to an LBT failure indication of an RB set to which the resource pool belongs.

In some embodiments, the processing module 1401 is configured to, in a case of receiving the LBT failure indication of the RB set to which the resource pool belongs that is delivered by a physical layer, start or restart an LBT failure detection timer associated with the resource pool, and increment an LBT failure counter associated with the resource pool by 1.

In some embodiments, the processing module 1401 is configured to, in a case where a part of resources of the resource pool belongs to any RB set and the LBT failure indication of the RB set delivered by a physical layer is received, start or restart an LBT failure detection timer associated with the resource pool, and increment an LBT failure counter associated with the resource pool by 1.

In some embodiments, the processing module 1401 is configured to, in a case where the LBT failure counter associated with the resource pool is greater than or equal to a second threshold, determine that the resource pool triggers an SL consistent LBT failure.

In some embodiments, the processing module 1401 is configured to, in a case of determining that the resource pool triggers an SL consistent LBT failure, reselect a resource from a resource pool where no SL consistent LBT failure occurs.

In some embodiments, the processing module 1401 is configured to reselect the resource from the resource pool where no SL consistent LBT failure occurs within the RB set to which the resource pool triggering the SL consistent LBT failure belongs.

In some embodiments, the processing module 1401 is configured to reselect the resource from the resource pool where no SL consistent LBT failure occurs within an RB set other than the RB set to which the resource pool triggering the SL consistent LBT failure belongs.

In some embodiments, one resource pool is associated with at least one of:
one LBT failure detection timer;
one LBT failure counter; or
a single maximum count of LBT failures. In some embodiments, the resource pool belongs to one RB set or to a plurality of RB sets.

In some embodiments, the transceiver module may be configured to receive the LBT failure detection timer configured by a network device for the resource pool.

In some embodiments, the transceiver module may be configured to receive a second threshold configured by the network device for the resource pool.

In the embodiments of the disclosure, when the terminal transmits SL data on the SL unlicensed frequency band, the terminal may count the LBT failure times of the resource pool according to the LBT failure indication(s) of the RB set(s) to which the resource pool belongs. Thus, when the granularity of the resource pool is smaller than the granularity of the RB set, the LBT failure times of the resource pool are counted based on the LBT failure indication(s) of the RB set(s) to which the resource pool belongs, enabling the SL consistent LBT failure detection with the granularity of the resource pool. It may be understood that the communication apparatus 1400 may be a terminal, an apparatus in a terminal, or an apparatus that may be used in conjunction with a terminal.

The communication apparatus 1400 is on a terminal side.

The processing module 1401 is configured to, in a case of sending SL data on an SL unlicensed frequency band, count LBT failure times of an RB set according to an LBT failure indication of the RB set.

In some embodiments, the processing module 1401 is configured to, in a case of receiving the LBT failure indication of the RB set delivered by a physical layer, start or restart an LBT failure detection timer associated with the RB set, and increment an LBT failure counter associated with the RB set by 1.

In some embodiments, the processing module 1401 is configured to, in a case where the LBT failure counter associated with the RB set is greater than or equal to a third threshold, determine that the RB set triggers an SL consistent LBT failure.

In some embodiments, the processing module 1401 is configured to, in a case of determining that the RB set triggers an SL consistent LBT failure, reselect a resource from an RB set where no SL consistent LBT failure occurs.

In some embodiments, the processing module 1401 is configured to reselect the resource from the RB set where no SL consistent LBT failure occurs within a resource pool to which the RB set triggering the SL consistent LBT failure belongs.

In some embodiments, the processing module 1401 is configured to reselect the resource from the RB set where no SL consistent LBT failure occurs within a resource pool other than a resource pool to which the RB set triggering the SL consistent LBT failure belongs.

In some embodiments, one RB set is associated with at least one of:
one LBT failure detection timer;
one LBT failure counter; or
a single maximum count of LBT failures.

In some embodiments, the transceiver module may be configured to receive the LBT failure detection timer configured by a network device for the RB set.

In some embodiments, the transceiver module may be configured to receive a third threshold configured by the network device for the RB set.

In the embodiments of the disclosure, when the terminal transmits the SL data on the SL unlicensed frequency band, the terminal may count the LBT failure times of the RB set based on the LBT failure indication of the RB set, thereby implementing the SL consistent LBT failure detection with the granularity of the RB set.

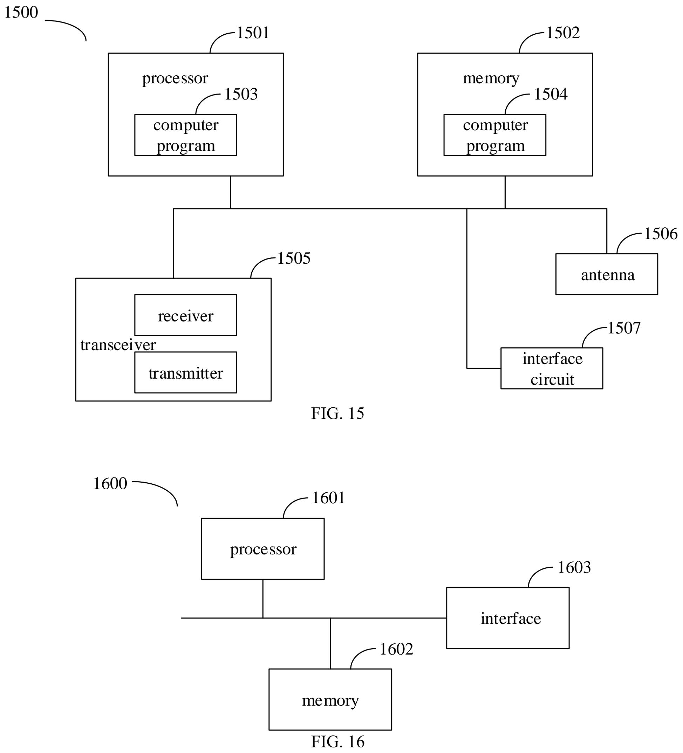

Referring to FIG. 15, FIG. 15 is a schematic diagram of another communication apparatus provided in an embodiment of the disclosure. In FIG. 15, the communication apparatus 1500 may be a network device, a terminal, a chip, a chip system, or a processor that supports the network device in implementing the above-mentioned method, or may also be a chip, a chip system, or a processor that supports the terminal in implementing the above-mentioned method. The apparatus may be configured to implement the method described in the above method embodiments, and for specific details, reference may be made to the descriptions in the above method embodiments.

The communication apparatus 1500 may include one or more processors 1501. The processor 1501 may be a general-purpose processor, a special-purpose processor, or the like. For example, the processor may be a baseband processor or a central processing unit (CPU). The baseband processor may be configured to process communication protocols and communication data, and the CPU may be configured to control the communication apparatus (e.g., a base station, a baseband chip, a terminal, a terminal chip, a distributed unit (DU), or a centralized unit (CU), etc.), execute computer programs, and process data of the computer programs.

In some embodiments, the communication apparatus 1500 may further include one or more memories 1502, on which a computer program 1504 may be stored. The processor 1501 executes the computer program 1504 to enable the communication apparatus 1500 to implement the method described in the above method embodiments. In some embodiments, data may also be stored in the memory 1502. The communication apparatus 1500 and the memory 1502 may be provided separately or integrated together.

In some embodiments, the communication apparatus 1500 may further include a transceiver 1505 and an antenna 1506. The transceiver 1505 may also be referred to as a transceiver unit, a transceiver machine, or a transceiver circuit, etc., and is configured to implement transceiving functions. The transceiver 1505 may include a receiver and a transmitter. The receiver may also be referred to as a receiving machine or a receiving circuit, etc., and is configured to implement a receiving function. The transmitter may also be referred to as a transmitting machine or a transmitting circuit, etc., and is configured to implement a transmitting function.

In some embodiments, the communication apparatus 1500 may further include one or more interface circuits 1507. The interface circuit 1507 is configured to receive code instructions and transmit the code instructions to the processor 1501. The processor 1501 runs the code instructions to enable the communication apparatus 1500 to implement the method described in the above method embodiments.

When the communication apparatus 1500 is a terminal: the processor 1501 is configured to execute step 301 in FIG. 3, etc.

When the communication apparatus 1500 is a network device: the transceiver 1505 is configured to execute step 601 in FIG. 6; steps 701 and 702 in FIG. 7; step 801 in FIG. 8; and steps 901 and 902 in FIG. 9.

In an implementation, the processor 1501 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 1501 may store a computer program 1503 that may be run by the processor 1501 and may cause the communication apparatus 1500 to perform the method described in the method embodiments above. The computer program 1503 may be solidified in the processor 1501, in which case the processor 1501 may be implemented by hardware.

In an implementation, the communication apparatus 1500 may include circuits. The circuits may implement the sending, receiving or communicating function in the preceding method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver may be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the descriptions of the above embodiments may be a network device or a terminal (e.g., the terminal in the above method embodiments), but the scope of the communication apparatus described in the disclosure is not limited thereto, and the structure of the communication apparatus may not be limited by FIG. 15. The communication apparatus may be a stand-alone device or may be part of a larger device. For example, the communication apparatus may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

The case that the communication apparatus is a chip or a chip system can refer to the schematic diagram of the chip shown in FIG. 16. A chip 1600 shown in FIG. 16 includes a processor 1601 and an interface 1603. There may be one or more processors 1601, and there are multiple interfaces 1603.

For the case where the chip is configured to implement the functions of the terminal in the embodiments of the disclosure:
The interface 1603 is configured to execute step 201 in FIG. 2, and/or step 301 in FIG. 3, and so on.

In some embodiments, the chip 1600 further includes a memory 1603 for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in the disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in the disclosure may not be configured. For another example, the above tables may be adjusted appropriately, such as splitting, combining, and the like. The names of the parameters shown in the titles of the above tables may be other names that may be understood by the communication apparatus, and the values or representations of the parameters may be other values or representations that may be understood by the communication apparatus. Each of the above tables may also be implemented with other data structures, such as, arrays, queues, containers, stacks, linear tables, pointers, chained lists, trees, graphs, structures, classes, heaps, and Hash tables.

## Claims

1. A method for counting sidelink (SL) consistent listen-before-talk (LBT) failure times, performed by a terminal, comprising:
in a case of sending SL data on an SL unlicensed frequency band, counting, according to an LBT failure indication of a resource block (RB) set belonging to a resource pool, LBT failure times of the resource pool.

2. The method according to claim 1, wherein counting, according to the LBT failure indication of the RB set belonging to the resource pool, the LBT failure times of the resource pool comprises:
in a case of receiving the LBT failure indication of the RB set belonging to the resource pool that is delivered by a physical layer, starting or restarting an LBT failure detection timer associated with the resource pool, and incrementing an LBT failure counter associated with the resource pool by 1.

3. The method according to claim 1 or 2, wherein counting, according to the LBT failure indication of the RB set belonging to the resource pool, the LBT failure times of the resource pool comprises:
in a case where the RB set has a part of resources belonging to the resource pool and the LBT failure indication of the RB set is received, starting or restarting an LBT failure detection timer associated with the resource pool, and incrementing an LBT failure counter associated with the resource pool by 1; or
in a case where the RB set has a part of resources belonging to the resource pool and the LBT failure indication of the RB set is received, not starting and not restarting the LBT failure detection timer associated with the resource pool, and not incrementing the LBT failure counter associated with the resource pool by 1.

4. The method according to claim 2 or 3, further comprising:
in a case where the LBT failure counter associated with the resource pool is greater than or equal to a first threshold, determining that the resource pool triggers an SL consistent LBT failure.

5. The method according to any one of claims 1 to 4, further comprising:
in a case of determining that the resource pool triggers an SL consistent LBT failure, reselecting a resource from a resource pool where no SL consistent LBT failure occurs.

6. The method according to any one of claims 1 to 5, wherein the resource pool is associated with at least one of:
one LBT failure detection timer;
one LBT failure counter; or
a single maximum count of LBT failures.

7. The method according to any one of claims 1 to 6, wherein the resource pool comprises one or more RB sets.

8. A method for counting sidelink (SL) consistent listen-before-talk (LBT) failure times, performed by a terminal, comprising:
in a case of sending SL data on an SL unlicensed frequency band, counting, according to an LBT failure indication of a resource block (RB) set to which a resource pool belongs, LBT failure times of the resource pool.

9. The method according to claim 8, wherein counting, according to the LBT failure indication of the RB set to which the resource pool belongs, the LBT failure times of the resource pool comprises:
in a case of receiving the LBT failure indication of the RB set to which the resource pool belongs that is delivered by a physical layer, starting or restarting an LBT failure detection timer associated with the resource pool, and incrementing an LBT failure counter associated with the resource pool by 1.

10. The method according to claim 8 or 9, wherein counting, according to the LBT failure indication of the RB set to which the resource pool belongs, the LBT failure times of the resource pool comprises:
in a case where a part of resources of the resource pool belongs to an RB set and the LBT failure indication of the RB set delivered by a physical layer is received, starting or restarting an LBT failure detection timer associated with the resource pool, and incrementing an LBT failure counter associated with the resource pool by 1.

11. The method according to claim 9 or 10, further comprising:
in a case where the LBT failure counter associated with the resource pool is greater than or equal to a second threshold, determining that the resource pool triggers an SL consistent LBT failure.

12. The method according to any one of claims 8 to 11, further comprising:
in a case of determining that the resource pool triggers an SL consistent LBT failure, reselecting a resource from a resource pool where no SL consistent LBT failure occurs.

13. The method according to claim 12, wherein reselecting the resource from the resource pool where no SL consistent LBT failure occurs comprises:
reselecting the resource from the resource pool where no SL consistent LBT failure occurs within the RB set to which the resource pool triggering the SL consistent LBT failure belongs.

14. The method according to claim 12 or 13, wherein reselecting the resource from the resource pool where no SL consistent LBT failure occurs comprises:
reselecting the resource from the resource pool where no SL consistent LBT failure occurs within an RB set other than the RB set to which the resource pool triggering the SL consistent LBT failure belongs.

15. The method according to any one of claims 8 to 14, wherein the resource pool is associated with at least one of:
one LBT failure detection timer;
one LBT failure counter; or
a single maximum count of LBT failures.

16. The method according to any one of claims 8 to 15, wherein the resource pool belongs to one RB set or to a plurality of RB sets.

17. A method for counting sidelink (SL) consistent listen-before-talk (LBT) failure times, performed by a terminal, comprising:
in a case of sending SL data on an SL unlicensed frequency band, counting, according to an LBT failure indication of a resource block (RB) set, LBT failure times of the RB set.

18. The method according to claim 17, wherein counting, according to the LBT failure indication of the RB set, the LBT failure times of the RB set comprises:
in a case of receiving the LBT failure indication of the RB set delivered by a physical layer, starting or restarting an LBT failure detection timer associated with the RB set, and incrementing an LBT failure counter associated with the RB set by 1.

19. The method according to claim 17 or 18, further comprising:
in a case where the LBT failure counter associated with the RB set is greater than or equal to a third threshold, determining that the RB set triggers an SL consistent LBT failure.

20. The method according to claims 17 to 19, further comprising:
in a case of determining that the RB set triggers an SL consistent LBT failure, reselecting a resource from an RB set where no SL consistent LBT failure occurs.

21. The method according to claim 20, wherein reselecting the resource from the RB set where no SL consistent LBT failure occurs comprises:
reselecting the resource from the RB set where no SL consistent LBT failure occurs within a resource pool to which the RB set triggering the SL consistent LBT failure belongs.

22. The method according to claim 20 or 21, wherein reselecting the resource from the RB set where no SL consistent LBT failure occurs comprises:
reselecting the resource from the RB set where no SL consistent LBT failure occurs within a resource pool other than a resource pool to which the RB set triggering the SL consistent LBT failure belongs.

23. The method according to any one of claims 17 to 22, wherein the RB set is associated with at least one of:
one LBT failure detection timer;
one LBT failure counter; or
a single maximum count of LBT failures.

24. A communication apparatus, comprising:
a processing module, configured to, during sending sidelink (SL) data on an SL unlicensed frequency band, count LBT failure times of a resource pool according to an listen-before-talk (LBT) failure indication of a resource block (RB) set belonging to the resource pool.

25. A communication apparatus, comprising:
a processing module, configured to, during sending sidelink (SL) data on an SL unlicensed frequency band, count LBT failure times of a resource pool according to an listen-before-talk (LBT) failure indication of a resource block (RB) set to which the resource pool belongs.

26. A communication apparatus, comprising:
a processing module, configured to, during sending sidelink (SL) data on an SL unlicensed frequency band, count LBT failure times of a resource block (RB) set according to an listen-before-talk (LBT) failure indication of the RB set.

27. A communication apparatus, comprising a processor and a memory storing a computer program, wherein the processor executes the computer program stored in the memory to enable the communication apparatus to perform the method according to any one of claims 1 to 7, or the method according to any one of claims 8 to 16, or the method according to any one of claims 17 to 23.

28. A computer-readable storage medium for storing instructions that, when executed, cause the method according to any one of claims 1 to 7 to be implemented, or the method according to any one of claims 8 to 16 to be implemented, or the method according to any one of claims 17 to 23 to be implemented.
